# EUROPÄISCHE PATENTSCHRIFT

(11) **EP 3 142 869 B1**
(45) Veröffentlichungstag und Bekanntmachung des Hinweises auf die Patenterteilung: **06.06.2018**
(21) Anmeldenummer: 15713728.2
(22) Anmeldetag: 31.03.2015
(51) Int. Cl.: B60B 35/08, B60G 9/00, B60G 7/00, B23K 20/12

(54) **LENKEREINHEIT UND VERFAHREN ZUR HERSTELLUNG EINER LENKEREINHEIT**
STEERING UNIT AND METHOD FOR PRODUCING A STEERING UNIT
UNITÉ DE DIRECTION ET PROCEDE DE FABRICATION D'UNE UNITÉ DE DIRECTION

(30) Priorität: 14.05.2014 DE 102014209080
(43) Veröffentlichungstag der Anmeldung: 22.03.2017
(73) Patentinhaber: SAF-HOLLAND GmbH, 63856 Bessenbach (DE)
(72) Erfinder: DREWES, Olaf, 63743 Aschaffenburg (DE); BIEWER, Frederik, 63808 Haibach (DE)
(74) Vertreter: Müller Schupfner & Partner Patent- und Rechtsanwaltspartnerschaft mbB
(86) Internationale Anmeldenummer: PCT/EP2015/056945
(87) Internationale Veröffentlichungsnummer: WO 2015/172936

(56) Entgegenhaltungen:
- EP-A1- 2 639 089
- EP-A2- 0 920 948
- WO-A1-97/01412
- WO-A1-2014/040884
- WO-A1-2014/040887
- JP-A- H08 300 167
- JP-A- 2000 288 747
- JP-A- 2001 132 728
- JP-A- 2002 336 975
- JP-A- 2010 188 924
- JP-A- 2012 110 920
- US-A1- 2009 305 077

## Beschreibung

Die vorliegende Erfindung betrifft ein Verfahren zur Herstellung einer Lenkereinheit sowie eine Lenkereinheit insbesondere zum Einsatz in Nutzfahrzeugen.

Derartige Lenkereinheiten und Verfahren zu ihrer Herstellung sind aus dem Stand der Technik bereits bekannt. So werden insbesondere in Nutzfahrzeugfahrwerken die Achsen oder Achsstummelanordnungen mittels schwenkbar am Rahmen des Fahrzeuges aufgehängter Längslenker gelagert, wobei gleichzeitig Federelemente und Schwingungsdämpferelemente an den Längslenkern angreifen und eine kontrollierte Verlagerbarkeit der am Fahrwerk angeordneten Räder des Nutzfahrzeuges zu gewährleisten. Die aus dem Stand der Technik bekannten Längslenker sind dabei häufig als Gussteile ausgeführt, wobei mehr oder weniger zusätzliche Komponenten des Lenkers oder an dem Lenker anzuschließende Bauteile einstückig mit dem Längslenker ausgebildet sind. Bei diesen als Gussteil ausgeführten Lenkern haben sich das hohe Gewicht, der große Fertigungsaufwand insbesondere bei komplexeren Lenkergeometrien, und die mangelhafte Schweißbarkeit als nachteilig herausgestellt. Weiterhin sind Längslenker bekannt, die aus einzelnen Blechen in Kastenbauweise aufgebaut und zusammengeschweißt sind. Diese Lenker erfordern jedoch einen ausgesprochen hohen Montageaufwand und ihre Festigkeit ist aufgrund der zahlreichen Schweißnähte mitunter geschwächt. Die bekannten Lenkereinheiten weisen somit insbesondere bezüglich des Gewichtes und bezüglich des Fertigungsaufwandes signifikante Nachteile auf.

Die WO 2014/040887 A1 zeigt ein Verfahren zur Herstellung einer Lenkereinheit, durch Bereitstellen eines Trägers, welcher einen ersten Verbindungsabschnitt aufweist, und eines Knotenelements mit einem Fügeabschnitt und Verbinden des Fügeabschnitts mit dem ersten Verbindungsabschnitt mittels eines Reibschweißverfahrens.
Die JP 2002336975 A, die JP 2010 188024 A, die JP 2012 110820 A, die JP H08 300167 A, die US 2008/805077 A1 und die JP 2001 182728 A offenbaren Bauteile zum Einsatz in Kraftfahrzeugen bei welchen Bereiche verschiedener Wandstärke ausgebildet sind.
Aufgabe der vorliegenden Erfindung ist es, ein Verfahren zur Herstellung einer Lenkereinheit bereitzustellen, welches möglichst einfach zu realisieren ist und gleichzeitig eine Gewichtsreduzierung der mit diesem Verfahren hergestellten Lenkereinheit ermöglicht. Außerdem ist es Aufgabe der vorliegenden Erfindung, eine Lenkereinheit bereitzustellen, welche besonders einfach herzustellen ist und darüber hinaus ausreichende Festigkeit und Lebensdauer bei gleichzeitig geringem Gewicht aufweist.
Diese Aufgabe wird gelöst mit einem Verfahren zur Herstellung einer Lenkereinheit gemäß Anspruch 1 und gemäß einer Lenkereinheit gemäß Anspruch 6. Weitere Vorteile und Merkmale der Erfindung ergeben sich aus den abhängigen Ansprüchen.
Erfindungsgemäß umfasst das Verfahren zur Herstellung einer Lenkereinheit die Schritte Bereitstellen eines Trägers, welcher einen ersten Verbindungsabschnitt aufweist, Umformen des Trägers im Bereich des ersten Verbindungsabschnitts derart, dass ein Stauchabschnitt gebildet wird, wobei die Wandstärke des Trägers im Bereich des Stauchabschnitts erhöht wird, Bereitstellen eines Knotenelements mit einem Fügeabschnitt und Verbinden des Fügeabschnitts mit dem ersten Verbindungsabschnitt mittels eines Reibschweißverfahrens. Der Träger ist bei seiner Bereitstellung ein möglichst einfach gestaltetes Bauteil und bevorzugt hohlkörperförmig ausgebildet. Vorzugsweise ist der Träger ein zylindrisch ausgebildetes Rohr. An einem Ende beziehungsweise einer seiner Stirnseiten weist der Träger einen ersten Verbindungsabschnitt auf, welcher insbesondere zur Festlegung des Knotenelements an den Träger geeignet ist. Um den Träger und das Knotenelement mittels eines Reibschweißverfahrens aneinander festlegen zu können, ist es vorgesehen, dass als Zwischenschritt ein Umformvorgang durchgeführt wird, bei welchem der Träger im Bereich des ersten Verbindungsabschnitts gestaucht wird. Zweckmäßigerweise wird das Umformen vor dem Verbinden des Fügeabschnitts mit dem ersten Verbindungsabschnitt durchgeführt. Bei diesem Umformen beziehungsweise Stauchen erhöht sich die Wandstärke des Trägers derart, dass ein Stauchabschnitt am Träger entsteht. Das Erhöhen der Wandstärke des Trägers im Bereich des Verbindungsabschnitts beziehungsweise im Bereich des Stauchabschnitts erleichtert und verbessert die Verbindung zwischen Träger und Knotenelement unter dem Einsatz eines Reibschweißverfahrens. Insbesondere ist es vorteilhaft für das Reibschweißverfahren, dass eine gewisse Mindestkontaktfläche zwischen den aneinander zu verschweißenden Bauteilen vorgesehen ist. Auf diese Weise sorgt eine relativ großflächige Anschmelzung während des Schweißens an beiden Bauteilen für eine möglichst gleichmäßige und mit nur wenigen Störstellen im Gefüge ausgestattete Verbindungszone zwischen den beiden Bauteilen Träger und Knotenelement. Insbesondere bevorzugt ist es, dass der Fügeabschnitt des Knotenelements eine ähnliche Wandstärke aufweist wie der Stauchabschnitt mit dem in Richtung des Knotenelements angeordneten Verbindungsabschnitt. Auf diese Weise lassen sich im zusammengefügten Zustand der Lenkereinheit sprunghafte Änderungen des Widerstandsmoments gegen Torsion und Biegung im Fügeabschnitt zwischen Träger und Knotenelement verringern oder vorzugsweise ganz verhindern. Derartige Sprünge des Widerstandsmoments beispielsweise gegen Biegung treten auf, wenn Bauteile mit verschiedenen Wandstärken direkt aneinander geschweißt werden und somit Kerbwirkung im Fügeabschnitt auftritt. Insbesondere bei Lenkereinheiten, welche zyklisch belastet werden, ist es erforderlich, diese Kerbwirkung auf ein Minimum zu reduzieren, um eine möglichst hohe Lebensdauer der Lenkereinheit erreichen zu können. Vorteilhaft bei dem vorgeschlagenen Verfahren ist, dass der Träger abgesehen vom Stauchabschnitt seine ursprüngliche Wandstärke behält und somit leichtgewichtig ausgebildet ist. Die während des Stauchens erzielte Verfestigung des Gefüges im Bereich im und benachbart zum Stauchbereich sorgt für eine ausreichende Gesamtfestigkeit des Trägers und einer mit diesem Träger ausgestatteten Lenkereinheit.

Bevorzugt weist der Träger in seinem ersten Zustand eine im Wesentlichen hohlzylindrische Form auf und wird durch Umformen in einen zweiten Zustand gebracht, in welchem der Träger gekrümmt ausgebildet ist. Die zweckmäßigerweise quer zur Zylinderachse verlaufende Krümmung dient insbesondere zur optimierten Ausnutzung des im Bereich der Lenkereinheit zur Verfügung stehenden Bauraumes. So lässt sich die Verwendbarkeit der Lenkereinheit für ausgewählte Fahrzeugtypen verbessern, in dem eine Krümmung des Trägers vorgesehen ist, welche Periphersystemen, wie Bremszylindern oder Achsliftsystemen, Raum gibt. Ein in seinem ersten Zustand als einfaches Rohr ausgebildeter Träger ist insbesondere billig und einfach herzustellen und weiterzuverarbeiten. Um den Träger von seiner ersten, im Wesentlichen hohlzylindrischen und gerade entlang einer Zylinderachse verlaufenden Form in seinen zweiten Zustand zu bringen, in dem er eine Krümmung quer zu der Zylinderachse des ersten Zustands aufweist, wird bevorzugt ein einfaches Kaltumformverfahren eingesetzt. Alternativ bevorzugt kann auch ein Innenhochdruckumformverfahren zum Einsatz gelangen. Der Vorteil eines einfachen Rohrbiegeverfahrens, bei dem gegebenenfalls ein Dorn in den Träger eingeführt und einfache Backenelemente von außen an den Träger angesetzt werden, ist, dass die zur Durchführung des Umformverfahrens nötige Technik wesentlich weniger komplex und fehleranfällig ist als beispielsweise bei einem Innenhochdruckumformverfahren. Mit einem Innenhochdruckumformverfahren dagegen lassen sich komplexere Geometrien verwirklichen. Zudem sind beim Innenhochdruckumformen nur geringe Beschädigungen der Flächen des Trägers zu erwarten.

Besonders bevorzugt wird der Träger nach dem Verschweißen mit dem Knotenelement in den zweiten Zustand gebracht. Mit anderen Worten wird der Verfahrensschritt des Umformens des Trägers von der geradlinig zylindrischen in eine gekrümmt hohlkörperförmige Form erst nach dem Verfahrensschritt des Reibschweißens des Knotenelements mit dem ersten Verbindungsabschnitt des Trägers durchgeführt. Der Vorteil dabei ist, dass der Träger in seiner einfach zylindrischen Gestalt leichter mittels beispielsweise eines Rotationsreibschweißverfahrens an der Knoteneinheit festlegbar ist. So ist insbesondere die Rotation des hohlzylindrischen, geraden Trägers mit geringerem Aufwand verbunden, als bei einem nicht zylindrisch ausgebildeten Träger, bei welchem Unwuchten relativ zur Rotationsachse auftreten. Weiterhin bevorzugt ist es daher möglich, dass der Träger eine gleichförmige Gewichtsverteilung relativ zu einer Rotationsachse, um welche er beim Rotationsreibschweißen gedreht wird, aufweist, wobei gleichzeitig die Kontaktfläche zwischen Knotenelement und Träger senkrecht zur Rotationsachse ausgerichtet ist.

Alternativ bevorzugt wird der Träger vor dem Verschweißen mit dem Knotenelement in den zweiten Zustand gebracht. Dies kann insbesondere dann bevorzugt sein, wenn es erwünscht ist, die zur Verbiegung des Trägers eingesetzte Biegetechnik besonders einfach zu halten, wobei der im ersten Zustand als einfaches Rohr ausgebildete Träger auf einfache Weise in ein gekrümmtes Rohr verformt wird. Das Reibschweißen kann insbesondere auch ein Schwingungsreibschweißen oder Linear-Reibschweißen sein, bei welchem entweder der Träger und das Knotenelement längs oder parallel zu einer Ebene, welche durch die Fügefläche verläuft, in Schwingung zueinander versetzt und gegeneinander gepresst werden, wobei es durch die Reibung des Trägers und des Knotenelements aneinander zu einer lokalen Anschmelzung im Bereich der Schweißzone kommt. Für dieses Schwingungsreibschweißverfahren sind Unwuchten an den zu verschweißenden Bauteilen ohne Belang. Mit Vorteil kann also die einfachere Verbiegung des Trägers vom ersten in den zweiten Zustand bereits vor dem Verschweißen mit dem Knotenelement durchgeführt werden.

Erfindungsgemäß wird der Träger mittels Kaltumformen in den zweiten Zustand gebracht. Das Kaltumformverfahren zeichnet sich durch seine besondere Einfachheit aus, da kein Erwärmen und nachträgliches Abkühlen des Trägers notwendig ist und der Träger somit auch von einem Monteur beziehungsweise einem Arbeiter ohne weiteren Schutz oder spezielle Handhabungsmittel einfach in das Umformwerkzeug eingesetzt und aus diesem wieder entnommen werden kann. Auf diese Weise können sowohl Kosten als auch Zeit gespart werden.

Weiterhin bevorzugt ist der Träger bei seiner Bereitstellung ein zylindrisches Rohr mit konstanter Wandstärke. Insbesondere, um die Materialkosten beziehungsweise die Halbzeugkosten bei der Herstellung einer Lenkereinheit zu reduzieren, ist es günstig, besonders einfach gestaltete Bauteile wie beispielsweise ein zylindrisches Rohr verwenden zu können. Weiterhin bevorzugt ist es dabei, dass der Träger in seinem ersten Zustand und vor dem Umformen mittels Stauchens eine konstante Wandstärke aufweist. Die Wandstärke wird in diesem Zusammenhang insbesondere senkrecht zur Zylinderachse des Trägers gemessen. Mit einer im Wesentlichen konstanten Wandstärke ist im Rahmen der vorliegenden Erfindung vorgesehen, dass kleinere Unebenheiten, welche fertigungsbedingt beziehungsweise im Rahmen der geltenden Toleranzen derartiger Bauteile liegen, als konstant im Sinne der vorliegenden Erfindung definiert sind.

Besonders bevorzugt weist der Träger an seinem, dem ersten Verbindungsabschnitt gegenüberliegenden Ende einen zweiten Verbindungsabschnitt auf, an welchem ein Lagerauge festlegbar oder festgelegt ist oder festgelegt wird. Das Lagerauge ist vorzugsweise eine Lagerbuchse, welche zur schwenkbaren Lagerung des Trägers am Rahmen eines Fahrwerks vorgesehen ist. Vorzugsweise weist der zweite Verbindungsabschnitt entsprechende Kontaktflächen auf, welche mit Vorteil mittels eines thermischen Schweißverfahrens an der Außenwand des Lagerauges festlegbar oder bevorzugt festgelegt sind. Erwartungsgemäß sind die auf den zweiten Verbindungsabschnitt einwirkenden Momenten- und Torsionskräfte wesentlich geringer als die Kräfte, die auf den ersten Verbindungsabschnitt zwischen dem Knotenelement und dem Träger einwirken. Es ist somit bevorzugt, den Träger im Bereich des zweiten Verbindungsabschnitts möglichst dünnwandig auszubilden, um insbesondere bevorzugt Materialkosten und Gewicht einsparen zu können.

Weiterhin bevorzugt ist ein Halteelement insbesondere mittels Reibschweißen an dem Träger festlegbar oder festgelegt oder wird festgelegt. Das Halteelement ist vorzugsweise ein Aufhängungspunkt für einen Stoßdämpfer. Insbesondere bevorzugt wird das Halteelement mittels eines Rotationsreibschweißens an der Außenfläche des Trägers, vorzugsweise im Bereich des Stauchabschnitts, festgelegt.

Mit Vorteil wird während des Ausbildens des Stauchabschnitts die Außenkontur des Trägers im Wesentlichen konstant gehalten. Mit anderen Worten wird bei dem Umformen beziehungsweise bevorzugt Stauchen des Trägers die Außenfläche des Trägers nicht beeinflusst und lediglich an der Innenwand eine Materialverdickung erzeugt. Hierdurch wird die Gefahr von Oberflächenrissen im Bereich des Stauchabschnitts, welche insbesondere bei zyklischer Belastung entstehen, minimiert.

Weiterhin bevorzugt ist erfindungsgemäß eine Lenkereinheit vorgesehen, welche einen Träger und ein Knotenelement aufweist, wobei der Träger hohlkörperförmig ausgebildet ist und einen Rohrabschnitt und angrenzend an den Rohrabschnitt einen Stauchabschnitt aufweist, wobei der Stauchabschnitt eine größere Wandstärke als der Rohrabschnitt aufweist, wobei auf der vom Rohrabschnitt abgewandten Seite des Stauchabschnitts das Knotenelement an dem Träger mittels eines Reibschweißverfahrens festlegbar oder festgelegt ist. Mit Vorteil ist die Lenkereinheit in einem zweiten Zustand vorgesehen, in dem der Träger eine gekrümmte bogenförmige Längserstreckung aufweist und ansonsten als hohlkörperförmiges Rohr ausgebildet ist. Die gekrümmte Ausbildung des Trägers und insbesondere des Rohrabschnitts erlaubt neben der Schaffung von Bauraum auch eine günstige Kraftübertragung zwischen dem an dem Träger festgelegte Knotenelement, einem an der Lenkereinheit festgelegten Achsrohr und einem am gegenüberliegenden Ende des Trägers festgelegten Lagerauges. Dabei ist es weiterhin von großem Vorteil, dass das Knotenelement über ein Reibschweißverfahren an dem Träger, insbesondere an einem ersten Verbindungsabschnitt des Trägers, festgelegt ist. Das Reibschweißen zeichnet sich dadurch aus, dass aufgrund der im Vergleich zu thermischen Verfahren relativ niedrigen Schweißtemperaturen nur geringe Gefügeschädigungen und lokale Thermospannungen auftreten und das Material im Bereich der Fügezone somit geeignet ist, höhere Zug- und Scherkräfte auszuhalten als dies nach Einsatz eines thermischen Schweißverfahrens der Fall wäre. Im Übrigen ist es durch das Reibschweißen möglich, Materialkombinationen (bspw. Aluminium und Stahl) miteinander zu verschweißen, die durch thermische Schweißverfahren nicht miteinander verschweißbar sind. Zur Verbesserung der Anbindung des Knotenelements an dem Träger weist der Träger einen Stauchabschnitt auf, welcher eine größere Wandstärke aufweist als der Rohrabschnitt des Trägers. Der Stauchabschnitt ist dabei insbesondere an dem Ende des Trägers angeordnet, an welchem das Knotenelement am Träger mittels Reibschweißen festlegbar und vorzugsweise festgelegt ist. Die größere Wandstärke des Stauchabschnitts erlaubt, dass eine breitere Anschmelzzone zwischen dem Träger und dem Knotenelement erzeugt werden kann und somit über eine größere, gleichmäßigere Fläche die entsprechenden Biegemomente von dem Knotenelement auf den Träger übertragen werden können. Mit Vorteil ist der Stauchabschnitt des Trägers dabei mittels eines Umformverfahrens gebildet, wobei auf diese Weise besonders hohe Festigkeitswerte und durch die im Umformen ausgebildete Gefügebeschaffenheit der Übergangszone zwischen Rohrabschnitt und Stauchabschnitt besonders hohe Biegemomente und Kräfte übertragen werden können. Umformen ist auch daher bevorzugt, weil sich während eines Umformens lokale Steigerungen der Gefügefestigkeit herausbilden, welche insbesondere die umgeformte Zone des Stauchabschnitts mit einer höheren Zugfestigkeit ausstatten.

Mit Vorteil weist der Stauchabschnitt eine mittlere Wandstärke auf, die in einem Verhältnis von 1,1 bis 5, vorzugsweise 1,2 bis 4 und besonders bevorzugt von 1,2 bis 3,5 zur mittleren Wandstärke des Rohrabschnitts steht. Der im Rahmen der Erfindung aufgefundene Verhältnisbereich von 1,1 bis 5 hat sich dabei als vorteilhaft insbesondere für ein breites Spektrum einzusetzender Herstellungsmaterialien für die Lenkereinheit gezeigt. So kann ein Faktor von 5 dabei insbesondere dann bevorzugt sein, wenn ein besonders dünnwandiger Rohrabschnitt ausreichend ist, die entsprechenden Biegemomente und Kräfte zu übertragen und gleichzeitig aber der Stauchabschnitt eine besonders große Wandstärke aufweisen muss, um eine möglichst große Schweißzone zum Einsatz des Reibschweißverfahrens bereitzustellen, da insbesondere die im Bereich des Stauchabschnitts auftretenden Biegemomente sehr hoch erwartet werden. Bei einem Verhältnis von 1,1 kann bevorzugt Material mit besonders guter Schweißbarkeit und mit einer Neigung zur Ausbildung besonders fester Gefügeverbindungen zwischen den geschweißten Werkstoffen eingesetzt werden, wobei gleichzeitig der Träger im Bereich des Rohrabschnitts eine relativ große Wandstärke aufweist, insbesondere, um auch entsprechende Längskräfte unabhängig von den Biegemomenten auf die Lenkereinheit übertragen zu können. Der bevorzugte Bereich von 1,2 bis 4 hat sich dabei als vorteilhaft zum Einsatz in hochbelasteten Nutzfahrzeugen gezeigt, wobei die Obergrenze von 4 insbesondere für relativ lange Träger vorteilhaft ist und der untere Verhältnisbereich von 1,2 sich auch für die üblicherweise verwendeten schweißbaren Gusswerkstoffe, aus denen Längslenker von Nutzfahrzeugen hergestellt werden, eignet. Der insbesondere bevorzugte Verhältnisbereich von 1,2 bis 3,5 hat sich dabei als besonders vorteilhaft für Lenkereinheiten gezeigt, welche zumindest teilweise aus Sphäroguss hergestellt sind. Solange das Verhältnis der Wanddicke des Stauchabschnitts zur Wanddicke des Rohrabschnitts in einem Verhältnis von 1,2 bis 3,5 gehalten wird, ist eine besonders gewichtsoptimierte Auslegung der Lenkereinheit, insbesondere des Trägers der Lenkereinheit, erreichbar.

Mit Vorteil ist zwischen dem Rohrabschnitt und dem Stauchabschnitt ein Übergangsabschnitt angeordnet, wobei der Übergangsabschnitt eine zum Stauchabschnitt hin monoton zunehmende Wandstärke aufweist. Der Übergangsabschnitt dient insbesondere der Verhinderung von Kerbwirkung im Bereich der Fügezone zwischen dem Träger und dem Knotenelement. Mit anderen Worten verhindert der Übergangsabschnitt dabei einen sprunghaften Abstieg beziehungsweise einen sprunghaften Abfall der Wandstärke vom Rohrabschnitt zum Stauchabschnitt hin beziehungsweise vom Stauchabschnitt zum Rohrabschnitt hin. Besonders bevorzugt ist der Übergangsabschnitt während des Umformens beziehungsweise vorzugsweise während des Stauchens des Trägers ausgebildet, wobei im Übergangsabschnitt besonders ein faserartiger Gefügeverlauf zwischen Rohrabschnitt und Stauchabschnitt ausgebildet ist. Besonders bevorzugt ist es dabei, dass die Wandstärke des Übergangsabschnitts monoton zunimmt, insbesondere der Übergangsabschnitt keine gleichbleibende Wandstärke hat, sondern sich als Wandstärke lediglich eine mittlere Wandstärke bestimmen lässt, welche im bevorzugten Fall der Mittelwert der Wandstärke des Stauchabschnitts und der Wandstärke des Rohrabschnitts ist. Der monotone Anstieg der Wandstärke des Übergangsabschnitts kann dabei vorzugsweise als bereichsweise linearer beziehungsweise gerader Anstieg definiert sein. Ein zumindest bereichsweise linearer Anstieg der Wandstärke des Übergangsabschnitts erlaubt eine einfache Qualitätskontrolle und Überprüfung der tatsächlichen Dimensionierung der Lenkereinheit, wobei sich die von der Lenkereinheit übertragbaren Kräfte in besonders gutem Maße vorausberechnen lassen. Alternativ bevorzugt können auch komplexere hyperbolische beziehungsweise parabolische Anstiege der Wandstärke des Übergangsabschnitts sein, wobei bei diesen Anstiegsverläufen höhere Kräfte übertragen werden können und dafür die Qualitätskontrolle zwar etwas erschwert ist, aber beispielsweise mit aufwendigeren, lasergestützten Messverfahren nach wie vor möglich ist.

Insbesondere bevorzugt weist der Übergangsabschnitt eine Übergangserstreckung auf, die zur Differenz zwischen der Wandstärke des Stauchabschnitts und der Wandstärke des Rohrabschnitts in einem Verhältnis von 0,8 bis 7, vorzugsweise von 2 bis 6 und besonders bevorzugt von ca. 4 bis 5,5 steht. Die Übergangserstreckung des Übergangsabschnitts ist dabei vorzugsweise als Erstreckung des Übergangsabschnitts quer zur Kontaktfläche zwischen dem Stauchabschnitt und dem Knotenelement definiert. Mit anderen Worten verläuft die Übergangserstreckung senkrecht zu der Messrichtung der Wandstärken des Stauchabschnitts und/oder des Rohrabschnitts. Das Verhältnis der Übergangserstreckung zur Differenz zwischen der Wandstärke des Stauchabschnitts und der Wandstärke des Rohrabschnitts ist mit anderen Worten ein Ausdruck für die Steile des Anstieges der Wandstärke zwischen dem Rohrabschnitt und dem Stauchabschnitt. Der bevorzugte Bereich von 0,8 bis 7 hat sich dabei als der Bereich herausgestellt, bei dem an seiner Untergrenze gerade noch schädliche Kerbwirkung verhindert werden kann und an seiner Obergrenze von 7 gerade noch der Bauraumbedarf des Übergangsabschnitts auf ein vorteilhaftes Minimum reduziert werden kann. Besonders bevorzugt ist ein Bereich von 2 bis 6 dieses Verhältnisses, da innerhalb dieses Verhältnisbereiches sowohl eine Gewichtsoptimierung aufgrund der insgesamt möglichen dünnen Wandstärken und der gleichzeitig geringen Kerbwirkung beziehungsweise Neigung zu Kerbwirkung des Materials im Bereich des Übergangsabschnitts erreichbar ist. Der besonders bevorzugte Bereich von ca. 4 bis 5,5 des Verhältnisses der Übergangserstreckung zur Differenz zwischen der Wandstärke des Stauchabschnitts und der Wandstärke des Rohrabschnitts hat sich dabei insbesondere in Bezug auf das zur Herstellung der erfindungsgemäßen Lenkereinheit verwendete Umformverfahren als vorteilhaft herausgestellt, weil ein solcher Verhältnisbereich sich durch einen besonders günstigen Gefügeverlauf und gleichzeitig eine gute Umformbarkeit des Materials bei einer geringen Neigung zur Entstehung von Rissen und Gefügeschädigungen herausgestellt hat.

Insbesondere bevorzugt weist der Übergangsabschnitt eine Rundung auf, die tangential in den Rohrabschnitt oder in den Stauchabschnitt übergeht. Als tangential übergehend wird dabei insbesondere eine gerundete Fläche, also die Innenfläche oder die Außenfläche des Stauchabschnitts angesehen, welche tangential in die entsprechend angrenzende Innenfläche oder Außenfläche des Rohr- oder des Stauchabschnitts übergeht. Eine Rundung mit tangentialem Übergang in die jeweils benachbarte Fläche des Rohrabschnitts oder des Stauchabschnitts erreicht eine optimale Minimierung von Kerbwirkung im Bereich des Übergangs zwischen Übergangsabschnitt und Rohrabschnitt und/oder Übergangsabschnitt und Stauchabschnitt.

Besonders bevorzugt weist der Übergangsabschnitt zwei Rundungen auf, von denen eine tangential in den Rohrabschnitt übergeht und die andere tangential in den Stauchabschnitt übergeht. Zwei tangentiale Rundungen sind zwar mit einem höheren Fertigungsaufwand verbunden, es kann sich aber als vorteilhaft herausstellen, diesen Fertigungsaufwand in Kauf zu nehmen, um eine noch bessere Vermeidung von Kerbwirkung zu erreichen und auf diese Weise die Lebensdauer der Lenkereinheit bei den zu erwartenden zyklischen Belastungen erreichen zu können. Insbesondere bevorzugt kann es dabei sein, dass die zwei am Übergangsabschnitt angeordneten Rundungen auch jeweils tangential ineinander übergehen, sodass die erste Rundung tangential zum Rohrabschnitt und an ihrem gegenüberliegenden Ende tangential zur zweiten Rundung verläuft und die zweite Rundung ausgehend vom tangentialen Übergang von der ersten Rundung tangential in den Stauchabschnitt übergeht. Es versteht sich, dass eine solche Ausbildung des Übergangsabschnitts wesentlich höhere Anforderungen an die Fertigungsgenauigkeit beim Umformen des Trägers zur Herausbildung des Stauchabschnitts stellt als dies bei der Ausbildung einer einfachen, einzelnen Rundung im Bereich des Übergangsabschnitts an entweder dem Rohrabschnitt oder dem Stauchabschnitt der Fall wäre. Insbesondere mit Blick auf die besonders hohen, an die Lenkereinheit gestellten Ansprüche bezüglich Kraftübertragung und gleichzeitig geringen Wandstärken zur Gewichtsminimierung kann dieser erhöhte Fertigungsaufwand aber gerechtfertigt sein.

Mit Vorteil ist die Außenkontur des Stauchabschnitts im Wesentlichen gleich der Außenkontur des Rohrabschnitts. Weiterhin bevorzugt ist die Außenkontur des Stauchabschnitts dabei im Wesentlichen konzentrisch zur Außenkontur des Rohrabschnitts ausgerichtet. Insbesondere im bevorzugten Fall, dass sowohl die Außenkontur des Rohrabschnitts als auch die Außenkontur des Stauchabschnitts zylindrisch ausgebildet sind, weisen diese bei dieser bevorzugten Ausführungsform den gleichen Außendurchmesser auf. Der Vorteil dieser bevorzugten Ausführungsform ist, dass die Außenfläche der aus Träger und Knotenelement aufgebauten Lenkereinheit auf diese Weise besonders einfach nachbearbeitet beziehungsweise poliert und geschliffen werden kann und somit wenige Angriffspunkte für korrosive Medien bietet.

Alternativ bevorzugt ist die Innenkontur des Stauchabschnitts im Wesentlichen gleich der Innenkontur des Rohrabschnitts. Die Alternative zur gleichen Ausbildung der Außenkontur von Rohrabschnitt und Stauchabschnitt bedeutet mit anderen Worten, dass die Wandstärkenzunahme im Bereich des Stauchabschnitts nach außen verläuft. Durch diese bevorzugte Ausführungsform kann lokal das Flächenträgheitsmoment gegen Biegung erhöht werden, da der für die Berechnung des Flächenträgheitsmoments bestimmende mittlere Durchmesser des Stauchabschnitts höher ist als der mittlere Durchmesser des Rohrabschnitts. Insbesondere kann ein relativ dünnes Rohr auf diese Weise auf eine Kontaktfläche des Knotenelements mit größerer Erstreckung längs der Ebene, in welcher der Träger an das Knotenelement angefügt wird, angepasst werden.

In einer weiteren bevorzugten Ausführungsform weist das Knotenelement im Bereich seiner Anbindung an den Verbindungsabschnitt eine Wandstärke auf, die in einem Verhältnis von 0,75 bis 1,5 zur Wandstärke des Stauchabschnitts steht. Insbesondere für den Fall, dass zur Steigerung der Variabilität des Einsatzes eines erfindungsgemäßen Trägers dieser an verschieden großen beziehungsweise verschieden dick ausgelegten Knotenelementen festgelegt wird, ist es vorteilhaft, dass der Wandstärkenunterschied zwischen dem Knotenelement und dem entsprechenden Stauchabschnitt des Trägers ein Verhältnis von 0,75 bis 1,5 nicht über- oder unterschreitet. Es hat sich im Rahmen der vorliegenden Erfindung gezeigt, dass nur innerhalb dieses Verhältnisbereiches die zu erwartende Kerbwirkung in Grenzen gehalten werden kann, und somit die Lebensdauer des Verbindungsbereiches zwischen Knotenelement und Träger beziehungsweise Stauchabschnitt gesteigert wird. Dennoch kann es sich als vorteilhaft erweisen, einen gewissen Unterschied zwischen der Wandstärke des Knotenelements im Bereich seiner Anbindung an den Verbindungsabschnitt und der Wandstärke des Stauchabschnitts des Trägers in Kauf zu nehmen und von vornherein im Rahmen der vorliegenden Erfindung vorzusehen, um eine hohe Variabilität und Kombinierbarkeit von verschiedenen Knotenelementen mit verschiedenen Träger zu erlauben und somit die gesamten Fertigungs- und Herstellungskosten von Lenkereinheiten verschiedener Größe für verschiedene Nutzfahrzeuge drastisch zu verringern.

Bevorzugt weist der Stauchabschnitt eine Staucherstreckung auf, die in einem Verhältnis von 0,3 bis 2,3, bevorzugt 0,5 bis 1,8 und besonders bevorzugt ca. 0,7 bis 1,6 zu einer Übergangserstreckung des Übergangsabschnitts steht. Das Einhalten des bevorzugten Bereiches von 0,3 bis 2,3 gewährleistet, dass der Stauchabschnitt derart ausgebildet ist, dass ausreichend Material zur Anschmelzung des Trägers im Bereich des Stauchabschnitts bereitgestellt wird, welches während des Einsatzes des Reibschweißverfahrens teilweise abgetragen wird, wobei gleichzeitig eine Gewichtszunahme vermieden wird in dem die Länge des Übergangsbereiches proportional zu der Staucherstreckung angepasst wird. Indem die Übergangserstreckung nicht kürzer als das 0,3-fache der Staucherstreckung gehalten wird, ist zudem mit Vorteil ein ausreichender Sicherheitsfaktor bei vollständigem Abtrag des Stauchabschnitts vorhanden, wobei der Übergangsabschnitt an seiner Seite mit der größeren Wandstärke zur Festlegung des Knotenelements dienen kann. Es wurde ermittelt, dass mit dem bevorzugten Verhältnisbereich von 0,5 bis 1,8 eine hohe Sicherheit gegen vollständiges Aufbrauchen des Stauchabschnitts bei gleichzeitig nur einer geringen Gewichtszunahme erreichbar ist. Indem ein bevorzugter Bereich von 0,7 bis 1,6 gewählt wird, lässt sich die Lenkereinheit besonders gut an die in Schwerlastnutzfahrzeugen herrschenden Anforderungen anpassen, da ein besonders gutes Verhältnis der Festigkeit der Verbindung zwischen Träger und Knotenelement und gleichzeitig ein nur geringes Gewicht der Lenkereinheit, insbesondere durch die nur geringe Länge des Übergangsabschnitts.

Weitere Vorteile und Merkmale der vorliegenden Erfindung ergeben sich aus der nachfolgenden Beschreibung mit Bezug auf die beigefügten Figuren. Es versteht sich, dass einzelne, nur in einzelnen Ausführungsformen gezeigte Merkmale auch in anderen gezeigten Ausführungsformen Anwendung finden können, solange dies nicht explizit ausgeschlossen wurde oder sich aufgrund technischer Gegebenheiten verbietet. Es zeigen:
- Fig. 1a, 1b und 1c: die wesentlichen Herstellungsschritte zur Herstellung einer erfindungsgemäßen Lenkereinheit,
- Fig. 2: eine Schnittansicht einer bevorzugten Ausführungsform des erfindungsgemäßen Trägers,
- Fig. 3: eine Detailansicht des Übergangsabschnitts der in Fig. 2 gezeigten bevorzugten Ausführungsform, und
- Fig. 4: eine Ansicht einer weiteren bevorzugten Ausführungsform der erfindungsgemäßen Lenkereinheit.

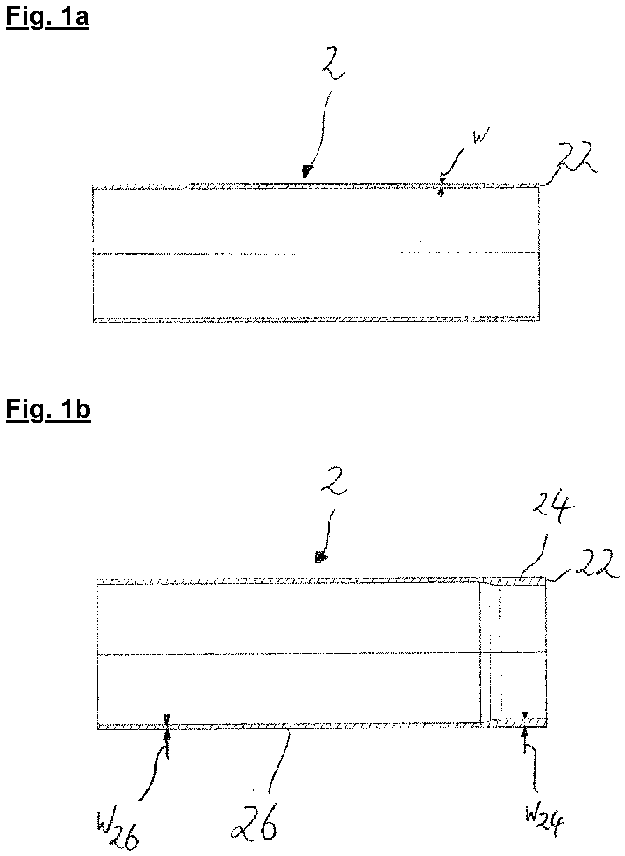

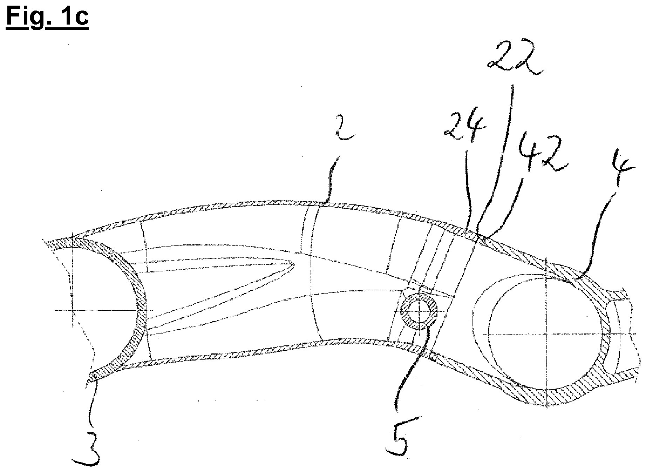

Fig. 1a zeigt den ersten Schritt des Verfahrens zur Herstellung einer Lenkereinheit, wobei ein Träger 2, welcher bevorzugt als einfaches Rohr ausgebildet ist und eine im Wesentlichen gleichbleibende Wandstärke w aufweist. Insbesondere bevorzugt ist es, dass der Träger 2 vor Beginn des Verfahrens ein gerades zylindrisches Rohr ist, welches sich rotationssymmetrisch zu einer in der Figur dargestellten Zylinderachse erstreckt. Fig. 1b zeigt eine bevorzugte Ausführungsform des Trägers 2 nach der Durchführung des Umformverfahrens, wobei an der in der Fig. rechten Seite des Trägers 2 ein Stauchabschnitt 24 gebildet ist, welcher eine höhere Wandstärke w₂₄ aufweist als die Wandstärke der verbleibenden Bereiche des Trägers 2. Dabei wird der unverformte beziehungsweise nicht gestauchte Bereich des Trägers 2 vorzugsweise als Rohrabschnitt 26 definiert, welcher eine Wandstärke w₂₆ aufweist, die vorzugsweise gleich der Wandstärke w des in Fig. 1a gezeigten unbearbeiteten Trägers 2 ist. Fig. 1c zeigt die bevorzugte Ausführungsform der erfindungsgemäßen Lenkereinheit, nachdem ein Knotenelement 4 mit dem Träger 2 durch ein Reibschweißverfahren stoffschlüssig und unlösbar verbunden wurde. Insbesondere ist dabei im Bereich des Verbindungsabschnitts 22 des Trägers 2 und eines Fügeabschnitts 42 des Knotenelements eine Anschmelzung erreicht worden, über welche das entsprechend korrespondierende Material beziehungsweise die korrespondierende Wand des Knotenelements 4 über intermetallische beziehungsweise atomare Verbindung der jeweiligen Herstellungsmaterialien fest an dem Träger 2 festgelegt ist. Weiterhin ist der Träger 2 in Fig. 1c in seinem bevorzugten zweiten Zustand gezeigt, wobei der Träger 2 gekrümmt ausgebildet ist, das heißt insbesondere bevorzugt kein geradliniger Zylinder mehr ist. Die gekrümmte Ausbildung des Trägers dient insbesondere zur Optimierung des Bauraumes und der Biegemomentübertragung zwischen dem auf der linken Seite an dem Träger 2 festgelegten Lagerauge 3 und einem im Bereich des Knotenelements 4 auftretenden Biegemoments, welches vorzugsweise um eine senkrecht zur Betrachtungsebene verlaufende Achse verläuft. Weiterhin ist in Fig. 1c ein an dem Träger 2 beziehungsweise insbesondere im Bereich des Stauchabschnitts 24 festgelegtes Halteelement 5 gezeigt, welcher ebenfalls vorzugsweise durch Reibschweißen an dem Träger 2 festgelegt ist.

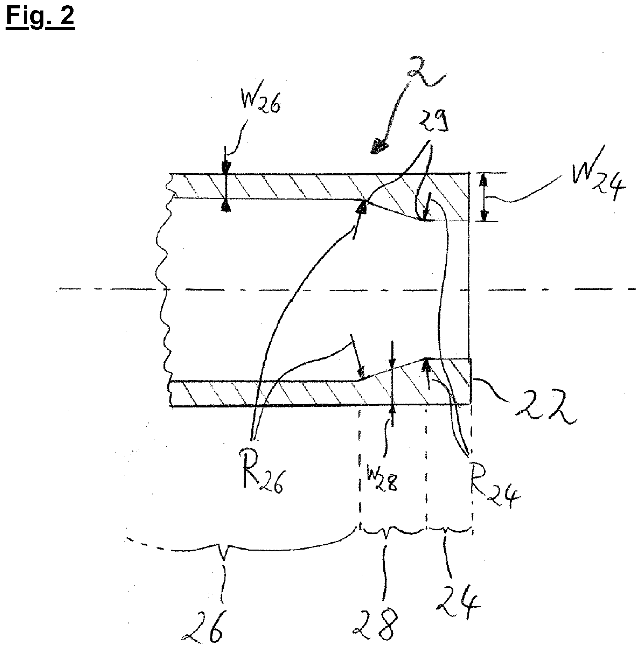

Fig. 2 zeigt eine Schnittansicht einer bevorzugten Ausführungsform des Trägers 2. Dabei sind insbesondere die einzelnen Wandstärken w des Rohrabschnitts 26 des Übergangsabschnitts 28 und des Stauchabschnitts 24 gekennzeichnet. Der Rohrabschnitt 26 weist dabei eine Wandstärke w₂₆ auf, welche kleiner ist als die Wandstärke w₂₄ des Stauchabschnitts 24. Zwischen dem Rohrabschnitt 26 und dem Stauchabschnitt 24 ist dabei vorzugsweise der Übergangsabschnitt 28 vorgesehen, dessen Wandstärke w₂₈ mit Vorteil zum Stauchabschnitt 24 hin monoton zunimmt. Insbesondere bevorzugt sind im Übergangsbereich zwischen dem Rohrabschnitt 26 und dem Übergangsabschnitt 28 sowie zwischen Übergangsabschnitt 28 und dem Stauchabschnitt 24 Rundungen 29 vorgesehen. Dabei weisen die Rundungen 29 im Bereich zwischen Rohrabschnitt 26 und Übergangsabschnitt 28 einen Rundungsradius von R₂₆ auf und die Rundungen 29 im Bereich zwischen dem Übergangsabschnitt 28 und dem Stauchabschnitt 24 einen Rundungsradius von R₂₄ auf. Insbesondere bevorzugt ist es dabei, dass die Rundungsradien R₂₆ und R₂₄ im Wesentlichen gleich sind. Dabei bedeutet im Wesentlichen gleich vorzugsweise, dass geringe Abweichungen aufgrund von Fertigungstoleranzen im Rahmen der vorliegenden Erfindung tolerierbar sein sollen.

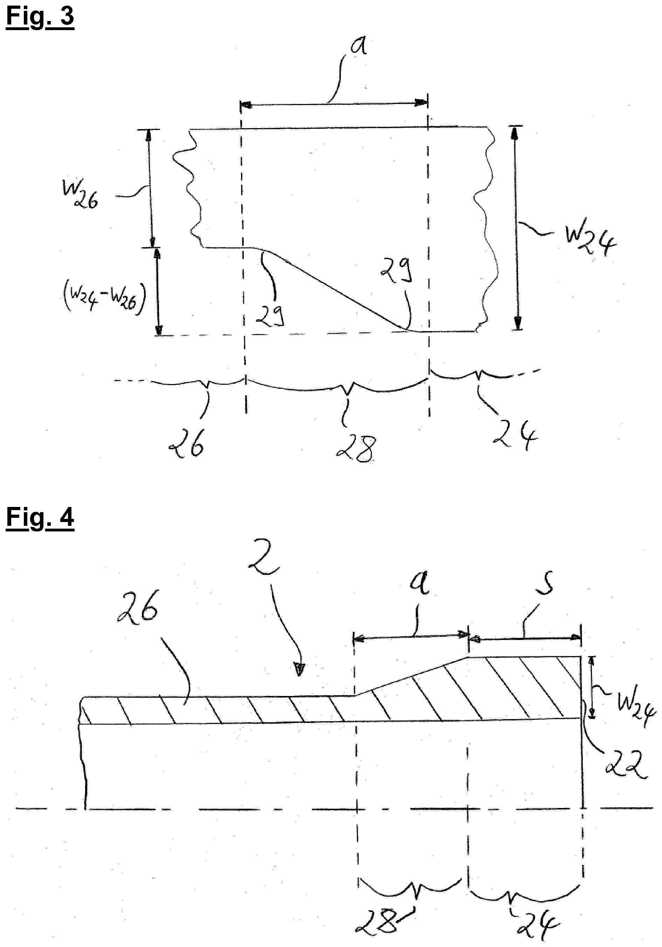

Fig. 3 zeigt eine detaillierte Schnittansicht des Übergangsabschnitts 28 der bereits in Fig. 2 gezeigten bevorzugten Ausführungsform der erfindungsgemäßen Lenkereinheit. Dabei ist insbesondere die Übergangserstreckung a gekennzeichnet. Die Übergangserstreckung a umfasst somit bevorzugt auch die Rundungen 29, wobei die Rundungen 29 vorzugsweise jeweils in den benachbarten Bereich, im vorliegenden Fall die benachbarte Innenfläche des Rohrabschnitts 26 auf der linken Seite und die benachbarte Innenfläche des Stauchabschnitts 24 auf der rechten Seite, übergehen. Weiterhin ist mit (w₂₄ - w₂₆) die Differenz zwischen der Wandstärke w₂₄ des Stauchabschnitts 24 und der Wandstärke w₂₆ des Rohrabschnitts 26 dargestellt. Bevorzugt ist es, dass die Übergangserstreckung a in einem Verhältnis von 0,8 bis 7 zu der Wandstärkendifferenz (w₂₄ - w₂₆) steht. Bei der vorliegend dargestellten bevorzugten Ausführungsform liegt dieses Verhältnis im Bereich von 4 bis 5,5.

Fig. 4 zeigt eine Schnittansicht einer weiteren bevorzugten Ausführungsform des erfindungsgemäßen Trägers 2, wobei deutlich ist, dass der Stauchabschnitt 24 eine bevorzugte Staucherstreckung s aufweist, die in einem bevorzugten Verhältnis von 0,7 bis 1,6 zur benachbart vorgesehenen Übergangserstreckung a des Übergangsabschnitts 28 liegt. Es ist auf diese Weise mit Vorteil gewährleistet, dass der Stauchabschnitt 24 derart ausgebildet ist, dass ausreichend Material zur Anschmelzung des Trägers 2 im Bereich des Stauchabschnitts 24 bereitgestellt wird, welches während des Einsatzes des Reibschweißverfahrens teilweise abgetragen wird. Gleichzeitig sollte der Stauchabschnitt 24 nicht länger als das 1,6-fache der Erstreckung des Übergangsabschnitts sein, um nicht unnötig das Gewicht des Trägers 2 durch zu groß beziehungsweise überdimensionierte Bereiche mit großer Wandstärke w₂₄ des Stauchabschnitts 24 zu erhöhen. Weiterhin weist die in Fig. 4 dargestellte bevorzugte Ausführungsform des Trägers als Alternative zu den in Fig. 1 bis 3 gezeigten Ausführungsformen eine konstante Innengeometrie des Trägers 2 vom Rohrabschnitts 26 über den Übergangsabschnitt 28 bis hin zum Stauchabschnitt 24 auf.

### Bezugszeichen:

- 2: - Träger
- 3: - Lagerauge
- 4: - Knotenelement
- 5: - Halteelement
- 22: - Verbindungsabschnitt
- 24: - Stauchabschnitt
- 26: - Rohrabschnitt
- 28: - Übergangsabschnitt
- 29: - Rundung
- 42: - Fügeabschnitt
- a: - Übergangserstreckung
- s: - Staucherstreckung
- R₂₄: - Rundungsradius
- R₂₆: - Rundungsradius
- w: - Wandstärke allgemein
- w₂₄: - Wandstärke des Stauchabschnitts
- w₂₆: - Wandstärke des Rohrabschnitts
- w₂₈: - Wandstärke des Übergangsabschnitts

## Patentansprüche

1. Verfahren zur Herstellung einer Lenkereinheit, umfassend die Schritte
a) Bereitstellen eines Trägers (2), welcher einen ersten Verbindungsabschnitt (22) aufweist,
b) Kaltumformen des Trägers (2) im Bereich des ersten Verbindungsabschnitts (22) derart, dass ein Stauchabschnitt (24) gebildet wird,
wobei die Wandstärke (w) des Trägers (2) im Bereich des Stauchabschnitts (24) erhöht wird,
c) Bereitstellen eines Knotenelements (4) mit einem Fügeabschnitt (42) und Verbinden des Fügeabschnitts (42) mit dem ersten Verbindungsabschnitt (22) mittels eines Reibschweißverfahrens

2. Verfahren nach Anspruch 1, wobei der Träger (2) in einem ersten Zustand eine im Wesentlichen hohlzylindrische Form aufweist und mittels Kaltumformens in einen zweiten Zustand gebracht wird, in welchem der Träger (2) gekrümmt ausgebildet ist.

3. Verfahren nach Anspruch 2, wobei der Träger (2) nach dem Verschweißen mit dem Knotenelement (4) in den zweiten Zustand gebracht wird, oder wobei der Träger (2) vor dem Verschweißen mit dem Knotenelement (4) in den zweiten Zustand gebracht wird.

4. Verfahren nach einem der vorhergehenden Ansprüche, wobei der Träger (2) an seinem, dem ersten Verbindungsabschnitt (22) gegenüberliegenden Ende einen zweiten Verbindungsabschnitt (23) aufweist, an welchem ein Lagerauge (3) festgelegt wird.

5. Verfahren nach einem der vorhergehenden Ansprüche, wobei während des Ausbildens des Stauchabschnitts (24) die Außenkontur des Trägers (2) im Wesentlichen konstant gehalten wird.

6. Lenkereinheit mit einem Träger (2) und einem Knotenelement (4),
wobei der Träger (2) hohlkörperförmig ausgebildet ist und einen Rohrabschnitt (26) und angrenzend an den Rohrabschnitt (26) einen Stauchabschnitt (24) aufweist,
wobei der Stauchabschnitt (24) eine größere Wandstärke (w) als der Rohrabschnitt (26) aufweist,
wobei auf der vom Rohrabschnitt (26) abgewandten Seite des Stauchabschnitts (24) das Knotenelement (4) an dem Träger (2) mittels eines Reibschweißverfahrens festlegbar ist,
wobei der Träger (2) im Bereich zwischen dem Rohrabschnitt (26) und dem Stauchabschnitt (24) eine durch Kaltumformen gesteigerte Gefügefestigkeit aufweist.

7. Lenkereinheit nach Anspruch 6, wobei der Stauchabschnitt (24) eine mittlere Wandstärke (w₂₄) aufweist die in einem Verhältnis von 1,1 bis 5, vorzugsweise 1,2 bis 4 und besonders bevorzugt von 1,2 bis 3,5 zur mittleren Wandstärke (w₂₆) des Rohrabschnitts (26) steht.

8. Lenkereinheit nach einem der Ansprüche 6 oder 7, wobei zwischen dem Rohrabschnitt (26) und dem Stauchabschnitt (24) ein Übergangsabschnitt (28) angeordnet ist, und wobei der Übergangsabschnitt (28) eine zum Stauchabschnitt (24) hin monoton zunehmende Wandstärke (w₂₈) aufweist.

9. Lenkereinheit nach Anspruch 8, wobei der Übergangsabschnitt (28) eine Übergangserstreckung (a) aufweist die zur Differenz zwischen der Wandstärke (w₂₄) des Stauchabschnitts und der Wandstärke (w₂₆) des Rohrabschnitts (26) in einem Verhältnis von 0,8 bis 7, vorzugsweise 2 bis 6 und besonders bevorzugt von ca. 4 bis 5,5 steht.

10. Lenkereinheit nach einem der Ansprüche 6 - 9, wobei der Übergangsabschnitt (28) eine Rundung (29) aufweist, die tangential in den Rohrabschnitt (26) oder in den Stauchabschnitt (24) übergeht.

11. Lenkereinheit nach einem der Ansprüche 6 - 10, wobei die Außenkontur des Stauchabschnitts (24) im Wesentlichen gleich der Außenkontur des Rohrabschnitts (26) ist.

12. Lenkereinheit nach einem der Ansprüche 6 - 10, wobei die Innenkontur des Stauchabschnitts (24) im Wesentlichen gleich der Innenkontur des Rohrabschnitts (26) ist.

13. Lenkereinheit nach einem der Ansprüche 6 - 12, wobei das Knotenelement (4) im Bereich seiner Anbindung an den Verbindungsabschnitt (22) eine Wandstärke (w₄) aufweist, die in einem Verhältnis von 0,75 bis 1,5 zur Wandstärke (w₂₄) des Stauchabschnitts (24) steht.

14. Lenkereinheit nach einem der Ansprüche 6 - 13, wobei der Stauchabschnitt (24) eine Staucherstreckung (s) aufweist, die in einem Verhältnis von 0,3 bis 2,3, bevorzugt 0,5 bis 1,8 und besonders bevorzugt ca. 0,7 bis 1,6 zu einer Übergangserstreckung (a) des Übergangsabschnitts (28) steht.

## Claims

1. A method for producing a link unit, comprising the steps
a) provision of a carrier (2) which has a first connecting section (22),
b) cold forming of the carrier (2) in the region of the first connecting section (22) in such a way that an upset section (24) is formed,
the wall thickness (w) of the carrier (2) being increased in the region of the upset section (24),
c) provision of a node element (4) with a joint section (42), and connecting of the joint section (42) to the first connecting section (22) by means of a rotary friction welding method.

2. The method as claimed in claim 1,
the carrier (2) having a substantially hollow-cylindrical shape in a first state, and being changed by means of cold forming into a second state, in which the carrier (2) is of curved configuration.

3. The method as claimed in claim 2,
the carrier (2) being changed into the second state after welding to the node element (4), or the carrier (2) being changed into the second state before welding to the node element (4).

4. The method as claimed in one of the preceding claims,
the carrier (2) having a second connecting section (23) at its end which lies opposite the first connecting section (22), on which second connecting section (23) a bearing socket (3) is fixed.

5. The method as claimed in one of the preceding claims,
the outer contour of the carrier (2) being kept substantially constant during the configuration of the upset section (24).

6. A link unit having a carrier (2) and a node element (4),
the carrier (2) being configured in the manner of a hollow body and having a tubular section (26) and, adjacently with respect to the tubular section (26), an upset section (24),
the upset section (24) having a greater wall thickness (w) than the tubular section (26),
it being possible for the node element (4) to be fixed on the carrier (2) by means of a rotary friction welding method on that side of the upset section (24) which faces away from the tubular section (26),
wherein the carrier (2) in a zone between the tubular section (26) and the upset section (24) has an increased structure strength due to cold forming.

7. The link unit as claimed in claim 6,
the upset section (24) having a mean wall thickness (w₂₄) which is in a ratio of from 1.1 to 5, preferably from 1.2 to 4 and particularly preferably of from 1.2 to 3.5 to the mean wall thickness (w₂₆) of the tubular section (26).

8. The link unit as claimed in either of claims 6 and 7,
a transition section (28) being arranged between the tubular section (26) and the upset section (24), and the transition section (28) having a wall thickness (w₂₈) which increases monotonically toward the upset section (24).

9. The link unit as claimed in claim 8,
the transition section (28) having a transition extent (a) which is in a ratio of from 0.8 to 7, preferably from 2 to 6 and particularly preferably of approximately from 4 to 5.5 to the difference between the wall thickness (w₂₄) of the upset section and the wall thickness (w₂₆) of the tubular section (26).

10. The link unit as claimed in one of claims 6-9,
the transition section (28) having a curvature (29) which merges tangentially into the tubular section (26) or into the upset section (24).

11. The link unit as claimed in one of claims 6-10,
the outer contour of the upset section (24) being substantially identical to the outer contour of the tubular section (26).

12. The link unit as claimed in one of claims 6-10,
the inner contour of the upset section (24) being substantially identical to the inner contour of the tubular section (26).

13. The link unit as claimed in one of claims 6-12,
the node element (4) having a wall thickness (w₄) in the region of its attachment to the connecting section (22), which wall thickness (w₄) is in a ratio of from 0.75 to 1.5 to the wall thickness (w₂₄) of the upset section (24).

14. The link unit as claimed in one of claims 6-13,
the upset section (24) having an upset extent (s) which is in a ratio of from 0.3 to 2.3, preferably from 0.5 to 1.8 and particularly preferably approximately from 0.7 to 1.6 to a transition extent (a) of the transition section (28).

## Revendications

1. Procédé de réalisation d'un ensemble formant bras oscillant, comprenant les étapes consistant à
a) fournir un support (2) qui comprend une première portion de liaison (22),
b) déformer à froid le support (2) dans la zone de la première portion de liaison (22) de manière à former une portion refoulée (24), l'épaisseur de paroi (w) du support (2) étant augmentée dans la zone de la portion refoulée (24),
c) fournir un élément formant noeud (4) avec une portion d'assemblage (42) et relier la portion d'assemblage (42) à la première portion de liaison (22) par un procédé de soudage à friction.

2. Procédé selon la revendication 1, dans lequel le support (2) présente, dans un premier état, une forme sensiblement cylindrique creuse et est amené par déformation à froid dans un second état dans lequel le support (2) est mis en forme incurvée.

3. Procédé selon la revendication 2, dans lequel le support (2) est amené dans le second état après le soudage avec l'élément formant noeud (4) ou dans lequel le support (2) est amené dans le second état avant le soudage avec l'élément formant noeud (4).

4. Procédé selon l'une des revendications précédentes, dans lequel le support (2) présente, à son extrémité opposée à la première portion de liaison (22), une seconde portion de liaison (23) sur laquelle est immobilisé un oeillet de montage (3).

5. Procédé selon l'une des revendications précédentes, dans lequel, pendant la réalisation de la portion refoulée (24), le contour extérieur du support (2) est maintenu sensiblement constant.

6. Ensemble formant bras oscillant comportant un support (2) et un élément formant noeud (4),
dans lequel
le support (2) est réalisé sous la forme d'un corps creux et comprend une portion tubulaire (26) et une portion refoulée (24) adjacente à la portion tubulaire (26),
la portion refoulée (24) présente une épaisseur de paroi (w) supérieure à celle de la portion tubulaire (26),
sur le côté de la portion refoulée (24) détourné de la portion tubulaire (26), l'élément formant noeud (4) est susceptible d'être immobilisé sur le support (2) par un procédé de soudage par friction,
le support (2) présente une solidité structurelle accrue par déformation à froid dans la zone entre la portion tubulaire (26) et la portion refoulée (24).

7. Ensemble formant bras oscillant selon la revendication 6, dans lequel la portion refoulée (24) présente une épaisseur de paroi moyenne (w₂₄) qui présente une relation de 1,1 à 5, de préférence de 1,2 à 4, de manière particulièrement préférée de 1,2 à 3,5 par rapport à l'épaisseur de paroi moyenne (w₂₆) de la portion tubulaire (26).

8. Ensemble formant bras oscillant selon l'une des revendications 6 ou 7, dans lequel une portion de transition (28) est agencée entre la portion tubulaire (26) et la portion refoulée (24), et la portion de transition (28) présente une épaisseur de paroi (w₂₈) qui augmente de façon monotone vers la portion refoulée (24).

9. Ensemble formant bras oscillant selon la revendication 8, dans lequel la portion de transition (28) présente une extension de transition (a) qui présente une relation de 0,8 à 7, de préférence de 2 à 6 et de manière particulièrement préférée d'environ 4 à 5,5 par rapport à la différence entre l'épaisseur de paroi (w₂₄) de la portion refoulée et l'épaisseur de paroi (w₂₆) de la portion tubulaire (26).

10. Ensemble formant bras oscillant selon l'une des revendications 6 à 9, dans lequel la portion de transition (28) présente un arrondi (29) qui se transforme tangentiellement en la portion tubulaire (26) ou en la portion refoulée (24).

11. Ensemble formant bras oscillant selon l'une des revendications 6 à 10, dans lequel le contour extérieur de la portion refoulée (24) est sensiblement égal au contour extérieur de la portion tubulaire (26).

12. Ensemble formant bras oscillant selon l'une des revendications 6 à 10, dans lequel le contour intérieur de la portion refoulée (24) est sensiblement égal au contour intérieur de la portion tubulaire (26).

13. Ensemble formant bras oscillant selon l'une des revendications 6 à 12, dans lequel l'élément formant noeud (4) présente, dans la zone de son attachement à la portion de liaison (22), une épaisseur de paroi (w₄) qui présente une relation de 0,75 à 1,5 par rapport à l'épaisseur de paroi (w₂₄) de la portion refoulée (24).

14. Ensemble formant bras oscillant selon l'une des revendications 6 à 13, dans lequel la portion refoulée (24) présente une extension de refoulement (s) qui présente une relation de 0,3 à 2,3, de préférence de 0,5 à 1,8, et de manière particulièrement préférée d'environ 0,7 à 1,6 par rapport à l'extension de transition (a) de la portion de transition (28).
